# EUROPEAN PATENT APPLICATION

(11) **EP 3 970 838 A1**
(43) Date of publication of application: **23.03.2022**
(21) Application number: 19929199.8
(22) Date of filing: 23.05.2019
(51) Int. Cl.: B01D 69/02, B82Y 30/00

(54) **FILTER UNIT AND SEPARATION DEVICE AND SEPARATION METHOD FOR FLUID**

(71) Applicant: Kotobuki Holdings Co., Ltd., Kitakyushu-shi, Fukuoka 802-0836 (JP)
(72) Inventor: TAKAGI Toshio, Kitakyushu-shi, Fukuoka 802-0042 (JP); SHIMIZU Yasushi, Kitakyushu-shi, Fukuoka 802-0836 (JP); MURATA Katsuyuki, Kitakyushu-shi, Fukuoka 802-0836 (JP); TANIGAKI Naoto, Kitakyushu-shi, Fukuoka 802-0836 (JP)
(74) Representative: Parker, Andrew James
(86) International application number: PCT/JP2019/020561
(87) International publication number: WO 2020/235111

(57) **Abstract**

Provided is a filter unit 10 including conductive filters 1a and 1b having permeation holes, a pair of electrodes 2 and 3 configured to apply a voltage to the carbon filters 1a and 1b, and an insulator 4 configured to prevent a current from flowing between the pair of electrodes 2 and 3.

## Description

### Technical Field

The present disclosure relates to a filter unit, and a separation device and a separation method for a fluid.

### Background Art

Distillation has been widely used in the gas separation industry as a process for obtaining high-purity products such as, for example, N₂, O₂, and noble gases. Since distillation involves a phase change that turns a liquid into a gas, a large amount of energy is consumed.

Therefore, instead of molecular separation based on a phase change such as distillation, a new fundamentally alternative separation technology such as membrane-based molecular separation is required. A membrane-based separation technology can be realized with a simple device compared to a conventional technology based on a phase change. Also, a membrane-based separation technology has advantages in that an installation area is small, energy consumption is reduced by, for example, 90% compared to that in distillation, and thus an amount of CO₂ emissions can be significantly reduced.

As a membrane used in separation technology, a carbon material such as a single-layer graphene membrane having permeation holes can be exemplified.

A raw graphene sheet is not able to allow even the smallest gas such as He to permeate therethrough. Therefore, in order to apply graphene to a separation technology, nanowindows need to be formed. In methods for producing graphene containing nanowindows, there are various methods such as an ion impact, a template synthetic mesh, and high temperature oxidation. Of these, since the high temperature oxidation only requires heating up to about 600 K in an oxidizing environment, a size of the nanowindow can be expanded simply and easily. Also, costs required for processing are low (Patent Literature 1 and 2).

### Citation List

### Patent Literature

[Patent Literature 1] Japanese Unexamined Patent Publication No. 2013-536077
[Patent Literature 2] Japanese Unexamined Patent Publication No. 2009-073727

### Summary of Invention

### Technical Problem

A carbon material having nanowindows is considered to be promising as a material for a membrane having excellent selectivity for molecular separation and high energy efficiency. Also, gaps between carbon nanotubes and gaps between carbon nanohorns also exhibit the same properties as nanowindows. Therefore, a carbon material having nanowindows can be a material for a filter having high energy efficiency. Therefore, a filter unit utilizing a carbon material capable of separating molecules would be considered to be extremely useful.

The present disclosure provides a filter unit, a separation device, and a separation method capable of separating a fluid with high accuracy.

### Solution to Problem

A filter unit according to one aspect of the present disclosure includes a conductive filter having permeation holes, a pair of electrodes configured to apply a voltage to the conductive filter, and an insulator configured to prevent a current from flowing between the pair of electrodes.

In the above-described filter unit, electric charges generated in the conductive filter due to application of a voltage by the pair of electrodes attract ions contained in the fluid. Due to such an electrostatic interaction, the fluid introduced into the filter unit can be separated with high accuracy, for example, at a molecular level. Since the above-described filter unit can separate a fluid based on an electrostatic interaction, there is no need to increase a pressure of the fluid. Therefore, energy costs required for separating a fluid can be reduced.

The above-described permeation holes of the filter unit may include a flexible nanowindow which is able to switch two or more types of orientation of functional groups formed at a rim by voltage application. The pair of electrodes described above may be configured to change molecular selectivity or molecular permeability of the carbon filter by applying a voltage to the carbon filter.

As described above, when the permeation holes including flexible nanowindows which are able to switch two or more types of orientation of functional groups formed on the rim by voltage application is provided, molecules of two types having substantially the same van der Waals diameter can be separated.

A separation device for a fluid according to one aspect of the present disclosure includes the filter unit described above, an introduction part configured to introduce a fluid into the filter unit, and an outflow part configured to cause the fluid to flow out from the filter unit, in which the outflow part includes a branch part which switches an outflow destination of the fluid in conjunction with change in a voltage applied to the carbon filter by a pair of electrodes.

According to the above-described separation device for a fluid, two separate outflow destinations for the fluid can be automatically switched. The separation device may include a control unit configured to control a switching operation of the branch part based on voltage change.

A separation method for a fluid according to one aspect of the present disclosure is a separation method for separating a fluid using a conductive filter having permeation holes and includes a step of changing distribution of electric charges in the permeation holes or size of the permeation holes by applying a voltage to the conductive filter with the conductive filter electrically insulated. According to this step, for example, the fluid can be separated with high accuracy. Since the above-described filter unit can separate the fluid based on potential difference, there is no need to increase pressure of the fluid. Therefore, energy costs required for separating a fluid can be reduced.

The above-described permeation holes may include a flexible nanowindow which is able to switch two or more types of orientation of functional groups formed at a rim by voltage application. Molecular selectivity or molecular permeability of the conductive filter may be changed by applying a voltage to the conductive filter in the step. Thereby, the fluid can be separated with high accuracy at molecular level.

The separation method described above may include a step of switching an outflow destination of the fluid in conjunction with change in a voltage of the conductive filter. According to the separation method for a fluid, two separate outflow destinations for the fluid can be automatically switched.

### Advantageous Effects of Invention

According to the present disclosure, a filter unit separation device and a separation method capable of separating a fluid with high accuracy can be provided.

### Brief Description of Drawings

FIG. 1 is a view illustrating an example of a disposition of parts in a filter unit.
FIG. 2 is a view illustrating an example of a disposition of parts in the filter unit.
FIG. 3 is a view illustrating an example of a disposition of parts in the filter unit.
FIG. 4 is a view illustrating an example of a disposition of parts in the filter unit.
FIG. 5 is a view illustrating an example of a disposition of parts in the filter unit.
FIG. 6 is a view illustrating an example of a disposition of parts in the filter unit.
FIG. 7 is a view illustrating one embodiment of a filter unit.
FIG. 8 is a view illustrating another embodiment of the filter unit.
FIG. 9 is a view illustrating one embodiment of a separation device.
FIG. 10 is a model diagram showing an example of a nanowindow and a rim in a carbon filter (Van der Waals diameter = 2.57 Å).
FIG. 11 is a model diagram showing an example of a nanowindow and a rim in a carbon filter (Van der Waals diameter = 2.73 Å).
FIG. 12 is a model diagram showing an example of a nanowindow and a rim in a carbon filter (Van der Waals diameter = 2.97 Å).
FIG. 13 is a model diagram showing an example of a nanowindow and a rim in a carbon filter (Van der Waals diameter = 3.30 Å).
FIG. 14 is a model diagram showing an example of a nanowindow and a rim in a carbon filter (Van der Waals diameter = 3.70 Å).
FIG. 15 is a model diagram showing an example of a nanowindow and a rim in a carbon filter (Van der Waals diameter = 3.78 Å).
FIG. 16 shows results obtained by adapting a permeability for each of molecules of oxygen, nitrogen, and argon in each model of FIGS. 10 to 15 to a primary model of MD simulation.
FIG. 17 shows results of a molecular dynamics simulation (MD simulation) of expansion and contraction of a nanowindow having a van der Waals diameter of 3.30 Å. This figure shows a 2D histogram contour of distances between two pairs of oxygen atoms at opposite poles in the rim constituting the nanowindow.
FIG. 18 shows two pairs of oxygen atoms (a pair of O1 and O2 and a pair of 03 and 04) used in calculation of the distances in FIG. 17.
FIG. 19 is a diagram showing a result of MD simulation of an effect of rotation of functional groups on a permeation rate of N2 in a flexible nanowindow structure (temperature = 77 K, van der Waals diameter = 3.30 Å).
FIG. 20 is a diagram showing a result of MD simulation of an effect of rotation of functional groups on a permeation rate of N2 in a high-rate rigid nanowindow structure (temperature = 77 K, van der Waals diameter = 3.30 Å).
FIG. 21 is a diagram showing a result of MD simulation of an effect of rotation of functional groups on a permeation rate of N2 in a medium-rate rigid nanowindow structure (temperature = 77 K, van der Waals diameter = 3.30 Å).
FIG. 22 is a diagram showing a result of MD simulation of an effect of rotation of functional groups on a permeation rate of N2 in a low-rate rigid nanowindow structure (temperature = 77 K, van der Waals diameter = 3.30 Å).
FIG. 23 is a diagram showing an example of orientations of functional groups formed on the rim.
FIG. 24 is a diagram showing an example of orientations of functional groups formed on the rim.
FIG. 25 is a diagram showing an example of orientations of functional groups formed on the rim.
FIG. 26 is a diagram for explaining opening/closing behavior of a nanowindow.
FIG. 27 is a diagram for explaining opening/closing behaviors of a nanowindow.
FIG. 28 is a view illustrating a filter unit of example 3.

### Description of Embodiments

Hereinafter, embodiments of the present disclosure will be described with reference to the drawings in some cases. However, the following embodiments are examples for explaining the present disclosure and are not intended to limit the present disclosure to the following contents. In the description, the same elements or elements having the same function will be denoted by the same reference signs and duplicate descriptions thereof will be omitted in some cases. Also, positional relationship such as above, below, left, and right are considered to be based on the positional relationship illustrated in the drawings unless otherwise specified. Further, dimensional proportions of respective elements are not limited to the proportions illustrated in the figure. A filter unit according to one embodiment includes a conductive filter, an insulator, and a pair of electrodes. This filter unit is used, for example, for separating a gas phase or a liquid phase, or removing foreign materials (molecules).

The conductive filter has conductivity. As the conductive filter, a carbon filter can be exemplified, but the present disclosure is not limited thereto, and the conductive filter may be formed of other materials. As a material of the carbon filter, nanocarbon can be exemplified. Specifically, graphene, carbon nanotubes, carbon nanoribbons, carbon nanohorns, graphene oxide, diamond-like carbon, or the like can be exemplified. Also, a carbonized thin film of a carbon precursor such as an acrylic resin may also be used. However, the present disclosure is not limited to these, and any carbon material capable of forming permeation holes having a high uniformity in size can be appropriately utilized. For example, carbon particles having electrical conductivity, for example, carbon particles having electrical conductivity such as acetylene black, and conductive carbon black such as Vulcan XC-72 (trade name) of Cabot Corporation may also be used.

The conductive filter may have a membrane shape. Nanotube ink or slurry used to form a film-shaped conductive filter may include at least one selected from the group consisting of a dispersant, a binder, conductive particles (Nafion, ionic liquid, or the like), and a thickener as necessary. The conductive filter has permeation holes. A shape of the permeation holes is not particularly limited. A size of the permeation holes may be 10 µm or less in diameter when converted into a circle having the same area. Molecules that can pass through the permeation holes and molecules that cannot pass through the permeation holes can be separated by a filter unit including the conductive filter.

The permeation holes may each be a nanowindow. The nanowindow is a window (gap) having a nanoscale size. A circumferential edge of the nanowindow may be formed of carbon atoms of a single layer. Materials (molecules) smaller than the size of the nanowindow can permeate through the carbon filter, for example, at an ultra-high rate while permeation thereof is not hindered by the nanowindow.

Nanowindows may be formed by perforating a membrane such as graphene using high temperature oxidation or other chemical methods. When the carbon filter is a membrane formed by aggregating carbon nanotubes, carbon nanohorns, or the like, gaps between the carbon nanotubes, between the carbon nanohorns, or between the carbon nanotubes and the carbon nanohorns may be used as the nanowindows.

Examples of a conductive filter other than a carbon filter include ITO having a porous structure and a metal film such as a platinum thin film having nano-through holes.

The pair of electrodes may have, for example, a working electrode and a counter electrode (counter electrode). The pair of electrodes apply a voltage to the conductive filter. The electrodes preferably have high conductivity and have corrosion resistance when they are used in a liquid. As a material of the electrodes, platinum, copper, and those such as copper whose surface has been plated with platinum can be exemplified.

A carbon filter itself having high conductivity can also be used as the working electrode. In addition, a liquid phase electrode such as a salt bridge can also be used. An efficiency of a liquid phase electrode is not very high, but there is an advantage thereof in that a standard electrode can be used.

The insulator has a function of electrically insulating the working electrode from the counter electrode. A voltage is applied to the conductive filter by the working electrode and a current is prevented from flowing by the insulator. Thereby, power consumption can be suppressed.

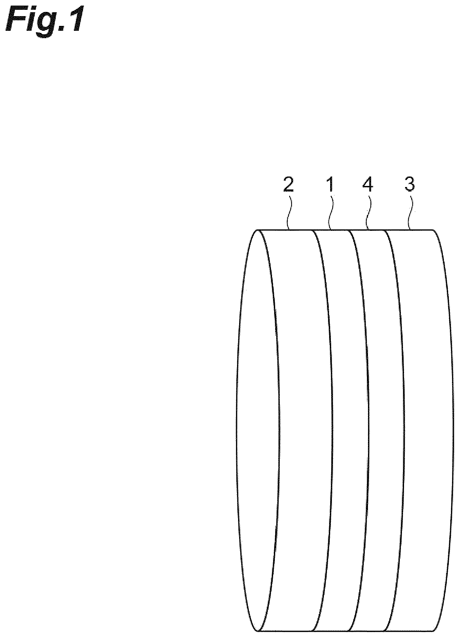

FIGS. 1 to 6 are views each schematically illustrating an example of a disposition of parts constituting the filter unit. In FIG. 1, one surface of a film-shaped conductive filter 1 is in contact with one surface of a disc-shaped working electrode 2. The other surface of the conductive filter 1 is in contact with one surface of a disc-shaped insulator 4. The other surface of the insulator 4 is in contact with a counter electrode 3.

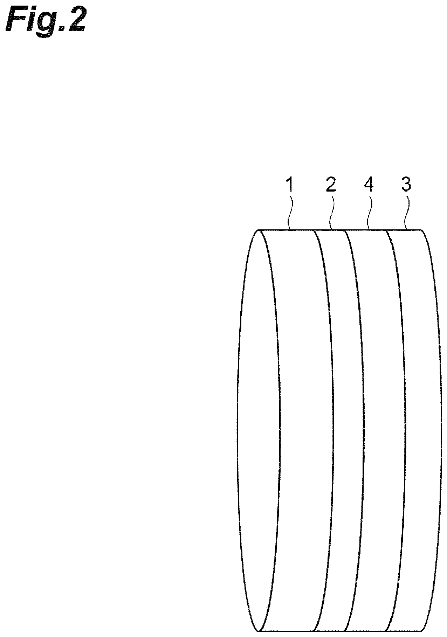

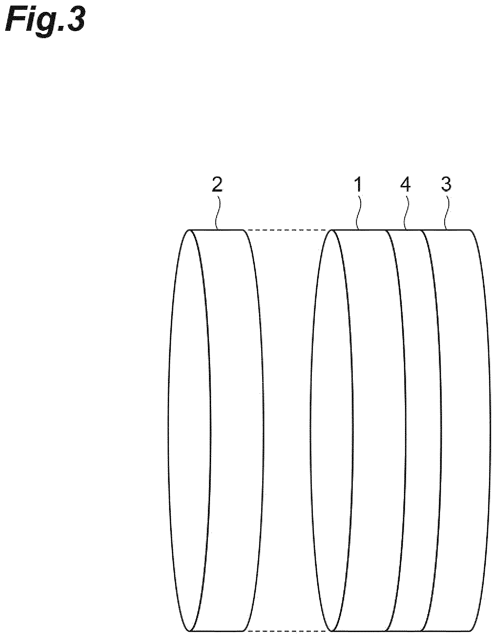

In FIG. 2, the conductive filter 1 is in contact with one surface of the disc-shaped working electrode 2, and one surface of the disc-shaped insulator 4 is in contact with the other surface of the working electrode 2. The other surface of the insulator 4 is in contact with the counter electrode 3. As illustrated in FIG. 3, when the filter unit is disposed in a liquid, the working electrode 2 may be disposed apart from the conductive filter, and the working electrode 2 and the conductive filter 1 may be electrically in contact with each other through the liquid. One surface of the insulator 4 is in contact with the other surface of the conductive filter 1. The other surface of the insulator 4 is in contact with the counter electrode 3.

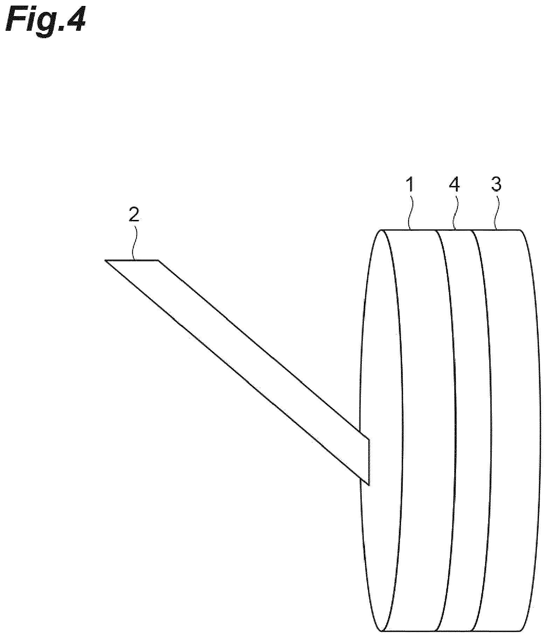

In FIG. 4, an end portion of the working electrode 2 having a rod shape is in contact with one surface of the conductive filter 1. One surface of the insulator 4 is in contact with the other surface of the conductive filter 1. Of these, those in FIGS. 1 and 2 are preferable because it is preferable that a sufficient voltage be able to be applied to the conductive filter 1 without deviation.

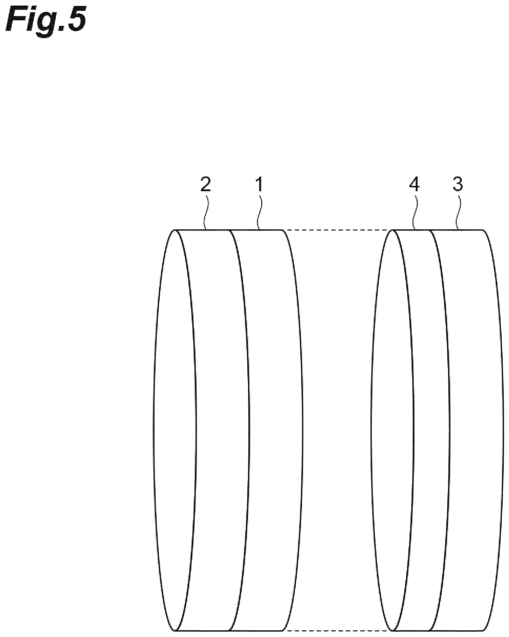

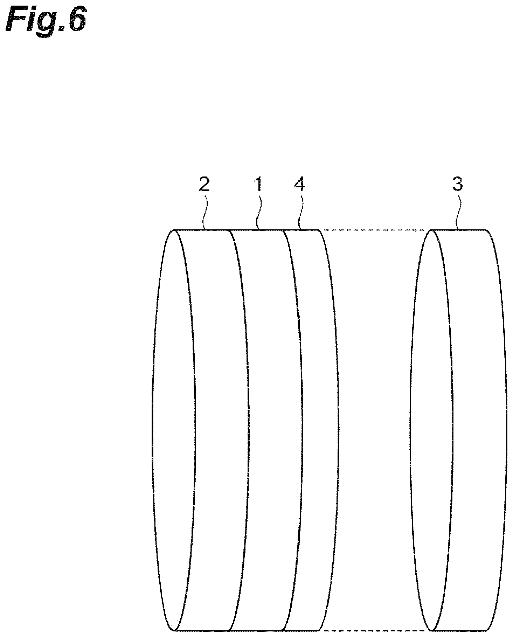

In FIG. 5, the conductive filter 1 and the insulator 4 are disposed apart from each other. The configuration other than this point is the same as that in FIG. 1. Another object or a second conductive filter may be sandwiched between the counter electrode 3 and the insulator 4. In FIG. 6, the counter electrode 3 and the insulator 4 are disposed apart from each other. The configuration other than this point is the same as those in FIG. 1. When the filter unit is disposed in a liquid, the members may be disposed apart from each other as in FIGS. 5 and 6.

A disposition of the members in the filter unit is not limited to the above-described examples, and, for example, two or more conductive filters 1 may be disposed, two or more pairs of electrodes 2 and 3 may be disposed, and two or more insulators 4 may be disposed.

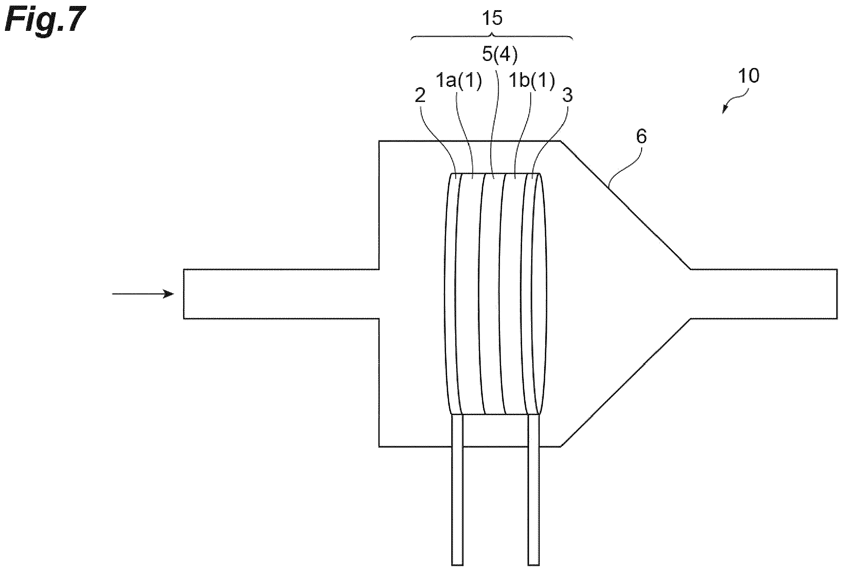

FIG. 7 is a view illustrating one embodiment of the filter unit. A filter unit 10 of FIG. 7 includes a filter holder 6 and a laminate 15 housed in the filter holder 6. The laminate 15 includes the working electrode 2, a conductive filter 1a, a membrane filter 5, a conductive filter 1b, and the counter electrode 3 from an upstream side in a flow direction of a fluid.

The conductive filters 1a and 1b may be, for example, carbon filters formed by attaching single-walled carbon nanotubes to the membrane filter 5 made of polycarbonate. A method of attaching the single-walled carbon nanotubes may be, for example, spray coating. However, the conductive filters 1a and 1b are not limited to such a manufacturing method and may be formed by bar-coding and drying slurry of single-walled carbon nanotubes on the polycarbonate membrane filter.

When the conductive filters 1a and 1b are carbon filters, for example, gaps between the carbon nanotubes function as permeation holes. The membrane filter 5 functions as an insulator. The membrane filter 5 is sandwiched between a pair of conductive filters 1a and 1b. The pair of conductive filters 1a and 1b and the disc-shaped electrodes 2 and 3 formed of a platinum mesh are respectively in contact with each other so that the electrodes 2 and 3 sandwich the conductive filters 1a and 1b from the outside. In this example, the working electrode 2 is disposed upstream of the conductive filters 1a and 1b and the counter electrode 3 is disposed downstream thereof in a direction in which the fluid flows. However, the present disclosure is not limited to such a disposition, and the counter electrode 3 may be disposed on the upstream side and the working electrode 2 may be disposed on the downstream side.

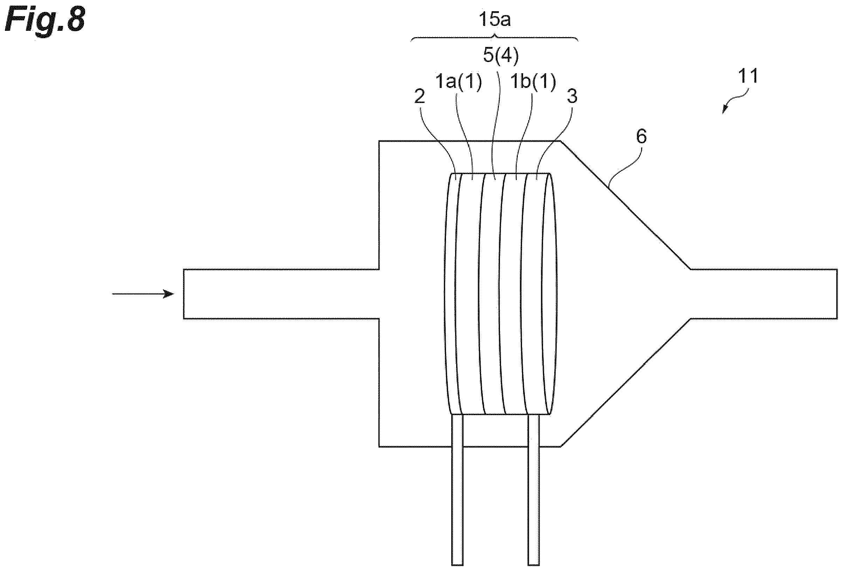

FIG. 8 is a view illustrating another embodiment of the filter unit. A filter unit 11 of FIG. 8 includes a filter holder 6 and a laminate 15a housed in the filter holder 6. The laminate 15a includes a working electrode 2, a conductive filter 1a, a membrane filter 5, a conductive filter 1b, and a counter electrode 3 from an upstream side in a direction in which the fluid flows. In this example, a thickness of the counter electrode 3 is larger than that of the counter electrode 3 in the example of FIG. 7. In this way, a thickness of each member may be changed as appropriate. The counter electrode 3 may be formed of carbon paper.

The filter unit of the present disclosure is not limited to the embodiments illustrated in FIGS. 7 and 8. For example, the filter unit 10 (11) may include the laminate as described with reference to FIGS. 1 to 6. Also, a shape of the filter holder 6 is not particularly limited as long as it has a structure in which the fluid can be brought into contact with the laminate.

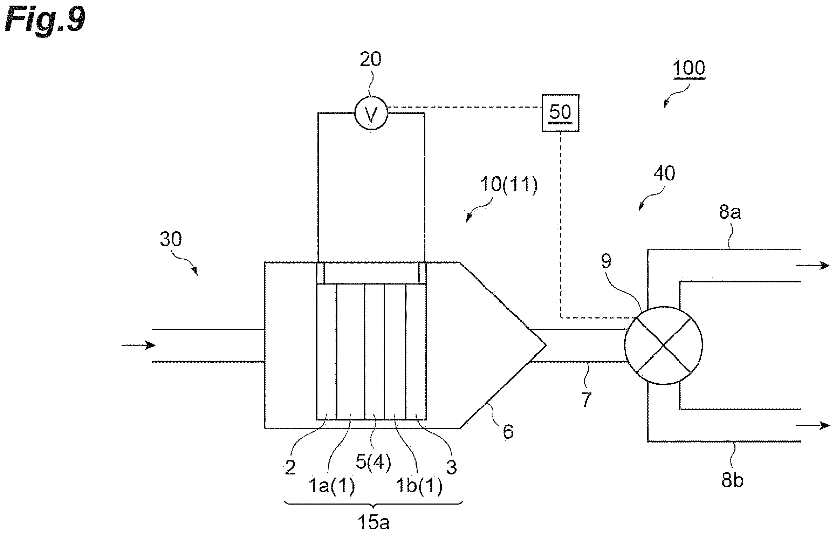

FIG. 9 is a view illustrating one embodiment of a separation device. A separation device 100 includes a filter unit 10, an introduction part 30 for introducing fluid into the filter unit 10, and an outflow part 40 for causing the fluid to flow out from the filter unit 10. The filter unit 10 may be the filter unit 11 illustrated in FIG. 8 or other filter units.

A power supply device 20 is electrically connected to electrodes 2 and 3. A potential difference between the electrodes 2 and 3 can be controlled by operating the power supply device 20. When a potential difference is generated between the electrodes 2 and 3, a voltage is applied to the conductive filters 1a and 1b to generate electric charge. The outflow part 40 includes a branch part 9 that switches an outflow destination of the fluid in conjunction with change in a voltage applied to the conductive filters 1a and 1b by the pair of electrodes 2 and 3. When such a branch part 9 is used, a branching step of switching an outflow destination of the fluid in conjunction with change in a voltage of the conductive filters 1a and 1b can be performed.

The branch part 9 may be, for example, a three-way valve. The outflow part 40 includes a main flow path 7 connected to the filter unit 11 and guiding the fluid to the branch part 9, and two branch flow paths 8a and 8b connected to the branch part 9. A control signal from a control unit 50 is input to the branch part 9. Information on a potential difference between the electrodes 2 and 3 is input from the power supply device 20 to the control unit 50. The branch part 9 can selectively switch an outflow destination of the fluid to the branch flow path 8a or the branch flow path 8b due to the control signal from the control unit 50.

The control unit 50 is configured to output a control signal for operating the branch part 9 based on voltage information from the power supply device 20 and may include, for example, a CPU (Central Processing Unit), a ROM (Read Only Memory), and a RAM (Random Access Memory), an input/output interface, and the like. However, it is not indispensable to include such a control unit 50. For example, voltage information from the power supply device 20 may be directly input to the branch part 9.

The separation device 100 can separate the fluid into two by the branch part 9 switching an outflow destination of the fluid. Further, the number of separations is not limited to two, and the fluid may be separated into three or more. Also, operation of the power supply device 20 (changing a voltage) for applying a voltage to the conductive filters 1a and 1b and switching of the outflow destination by the branch part 9 do not have to be performed at exactly the same time. For example, the operation of switching the outflow destination of the fluid by the branch part 9 may be performed at a predetermined time difference from the operation of the power supply device 20 by the control unit 50. For example, when a time difference is set in consideration of a time required for a flow of the main flow path 7, separation accuracy of the fluid can be further improved.

### <Separation Method in Liquid Phase>

Hereinafter, a separation method in a liquid phase using the filter unit will be described. An ion separation method using the filter unit will be described. A cathode (working electrode 2) is brought into contact with the conductive filter 1 (1a) on the upstream side, and a voltage of 0.1 V to 10 V is applied. Thereby, electrostatic attractive and repulsive forces act on ions contained in the fluid in permeation holes of the conductive filter 1 (1a). When an ionic solution as a fluid is introduced into the filter unit, metal cations are attracted to the cathode and the conductive filter 1 (1a) and do not easily permeate through the conductive filter 1 (1a). In addition to this, anions repel the conductive filter 1 (1a) and do not easily permeate through the conductive filter 1 (1a). Thereby, the ionic solution is separated into a high-concentration cation solution upstream of the conductive filter 1 (1a) and a low-concentration cation solution downstream thereof.

Therefore, when the filter unit of the present disclosure is installed in tap water pipe or the like, unnecessary ions or the like can be separated from water and then removed or reduced. For example, when the cathode is brought into contact with the upstream side of the conductive filter 1 (1a) and a voltage is applied, alkali metal ions (calcium ions and magnesium ions) in water are attracted to the cathode and do not easily permeate through the conductive filter 1. Therefore, soft water that has permeated through the conductive filter 1 (1a) can be utilized.

In a case of the separation device 100 including the branch part 9 as illustrated in FIG. 9, in one example, when a voltage is applied to the conductive filters 1a and 1b, one branch flow path 8b is allowed to communicate with the main flow path 7, and soft water can be caused to flow out to the downstream side of the branch flow path 8b. When no voltage is applied, the branch flow path 8a is allowed to communicate with the main flow path 7, and water having high alkali metal ion concentration can be caused to flow out to the downstream side of the branch flow path 8a.

When ions to be removed are anions, a voltage is applied by bringing the cathode (working electrode 2) into contact with the conductive filter 1 from the downstream side, and the anode (counter electrode 3) is disposed on the upstream side of the conductive filter 1 with the insulator 4 interposed therebetween. When a voltage is applied to the conductive filter 1, since anions (silica ions or the like) in water are attracted to the anode and do not easily permeate through the conductive filter 1, water having a low anion concentration can be separated from the water.

As described above, the filter unit of the present disclosure separates the fluid by attracting ions. That is, since separation of the fluid can be performed by utilizing change in distribution of electric charge in the permeation holes of the conductive filter, a pressure of the fluid such as a gas or a liquid may not be changed. Therefore, energy costs required for separating a fluid can be reduced. Also, when voltage application is turned off, objects that have been separated on the upstream side of the conductive filter 1 also flow to the downstream side. Therefore, the objects are not easily accumulated on the upstream side as in a conventional filtration. Accordingly, frequency of maintenance such as filter replacement can be reduced. Also, since a fluid is separated using electrostatic attractive and repulsive forces, high-performance separation can be realized at lower energy costs than in conventional membranes.

Further, the branch part 9 that selectively switches the branch flow paths 8a and 8b communicating with the main flow path 7 in conjunction with application of a voltage to the conductive filter 1 (1a, 1b) is provided downstream of the conductive filter 1 (1a,1b), and thereby the fluid can be separated into two, and the two fluids (a first fluid and a second fluid) can be caused to flow out separately into the branch flow path 8a and the branch flow path 8b.

### <Carbon Filter Having Flexible Nanowindow>

The conductive filter of the filter unit of the present disclosure may be a carbon filter having a flexible nanowindow from the perspective of performing more effective separation. In the flexible nanowindow, functional groups to be described later are combined with carbon atoms constituting a circumferential edge (rim) or carbon atoms in the vicinity of the rim to form the functional groups on the rim, and thereby the flexible nanowindow can allow molecules larger than a van der Waals diameter of the flexible nanowindow to permeate therethrough. Hereinafter, a case in which graphene having flexible nanowindows is employed as the carbon filter will be mainly described.

The functional group may have heteroatoms. The heteroatoms mean atoms other than hydrogen and carbon. As examples of the heteroatoms, oxygen (O), nitrogen (N), sulfur (S), phosphorus (P), chlorine (Cl), iodine (I), bromine (Br), boron (B), and the like can be exemplified. The functional group may be a general functional group that imparts chemical properties. As functional groups having heteroatoms, a hydroxyl group, a carboxyl group, a carbonyl group, and the like can be exemplified. In the following description, when it is simply referred to as "functional group," it means functional groups formed on the rim as described above.

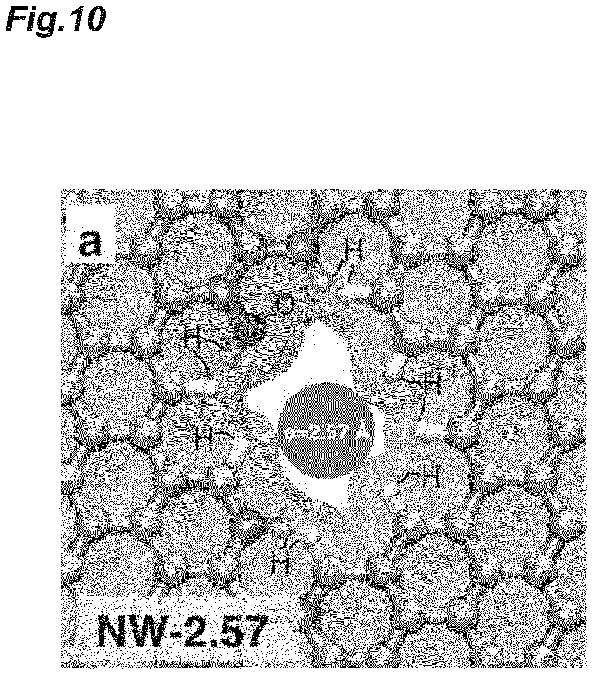

FIGS. 10 to 15 are model diagrams showing examples of carbon filters and rims having different flexible nanowindows in size. In each model of FIGS. 10 to 15, a light gray atom indicates carbon (C), a dark gray atom indicates oxygen (O), and a white atom indicates hydrogen (H). Those denoted as NW-x are van der Waals diameters φ (Å) of the nanowindows. The van der Waals diameter of the nanowindow of FIG. 10 is 2.57 Å.

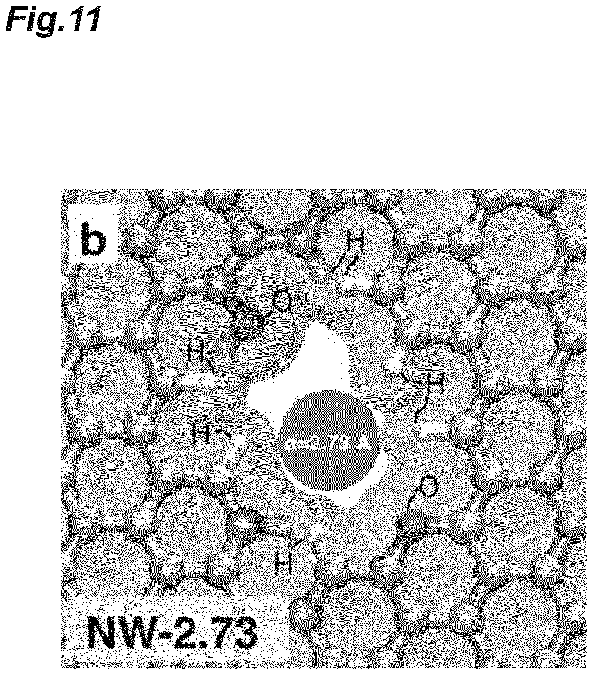

The van der Waals diameters of the nanowindows of FIGS. 11, 12, 13, 14, and 15 are 2.73 Å, 2.97 Å, 3.30 Å, 3.70 Å, and 3.78 Å (As shown in each figure, in the description of "NW-x," x refers to the van der Waals diameter φ(Å) of the flexible nanowindow.). As described above, the van der Waals diameter of the flexible nanowindow is equal to a maximum diameter of a circle inscribed in the flexible nanowindow. As the van der Waals diameter of the flexible nanowindow increases, a permeation rate of the fluid (molecule) increases. On the other hand, selectivity thereof decreases conversely.

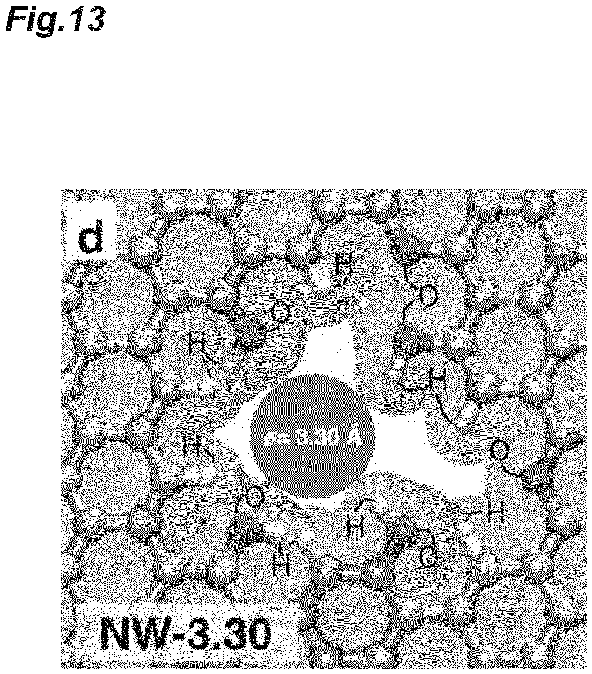

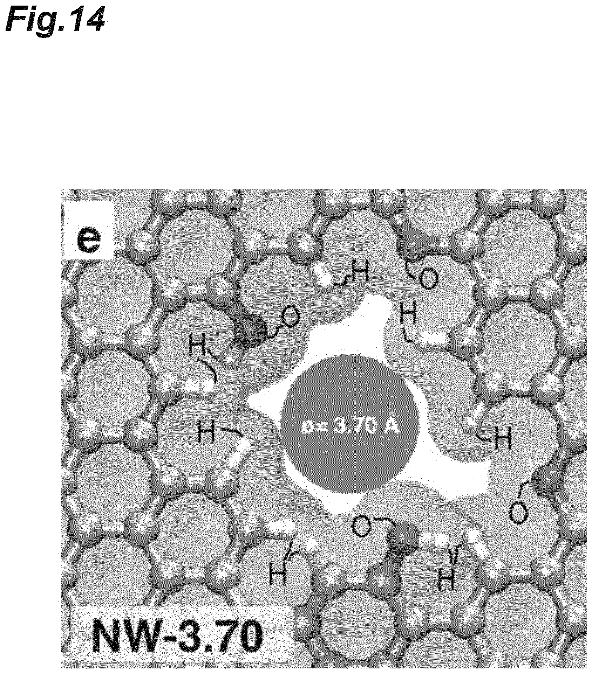

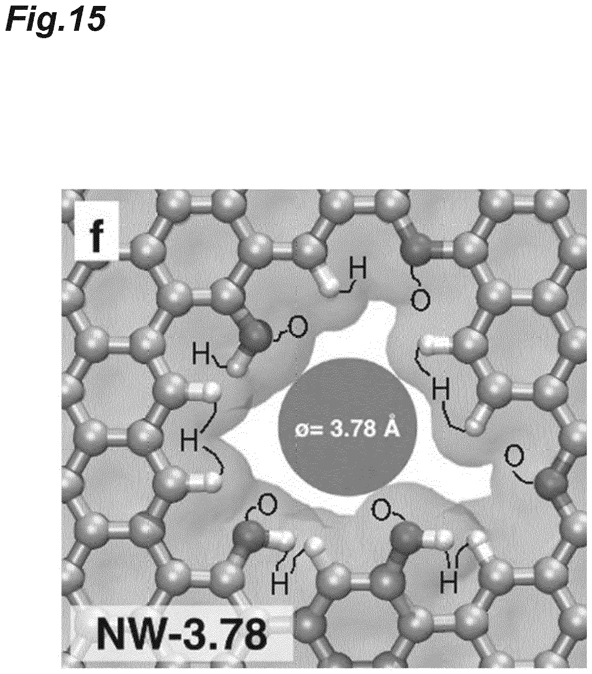

Therefore, the flexible nanowindows of FIG. 14 (NW-3.78) and FIG. 15 (NW-3.70) have a high permeability and a low separation selectivity. For example, when the van der Waals diameter of the flexible nanowindow is set to the size of FIG. 13, an Ar permeation rate decreases by a factor of 50 compared to the flexible nanowindow of FIG. 14. Also, an N₂/Ar selectivity increases to 20 and there is an effect as a molecular sieve.

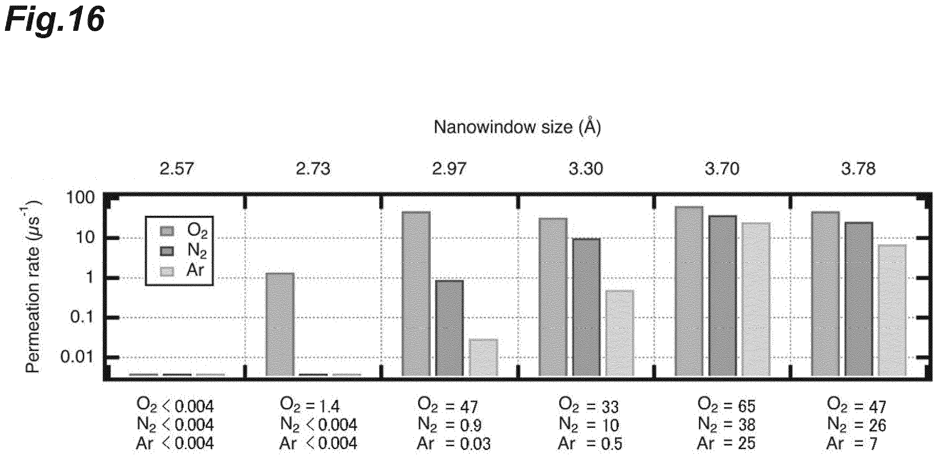

FIG. 16 shows results obtained by adapting a permeability for each of molecules of oxygen, nitrogen, and argon in each model of FIGS. 10 to 15 to a primary model of MD simulation. When the permeability (unit: µs⁻¹) shown in FIG. 16 is "permeability < 0.004 µs⁻¹," this can be construed that the molecule cannot permeate.

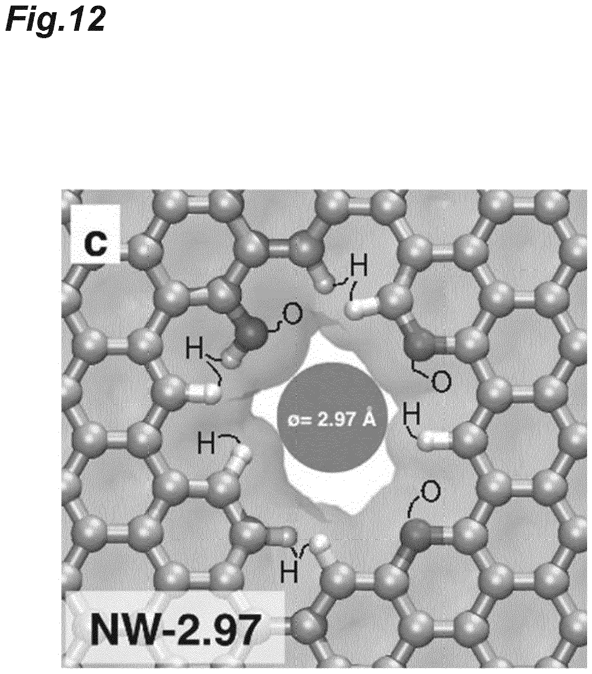

Of the flexible nanowindows of FIGS. 10 to 15, one capable of achieving both the permeability and the selectivity of oxygen at a high level is that illustrated in FIG. 12. An oxygen permeation rate constant is 47 µs⁻¹ and this corresponds to 600 m³STP·min⁻¹m⁻². In this case, as shown in FIG. 16, the selectivity is greater than 50 times in O₂:N₂ separation (1500 times in O₂:Ar separation). In FIG. 16, three bar graphs are shown for each size of the nanowindows. Of the three bar graphs, a left side indicates O₂, a center indicates N₂, and a right side indicates Ar.

Partial charges of the heteroatoms contained in the functional groups formed in the rim induce a strong electrostatic field of GV/m inside the flexible nanowindow. An interaction between a molecule having a polarized charge center such as N₂ and an electric field thereof facilitates a process of molecular permeation in the flexible nanowindow. Further, coordinated motions of the functional groups in the rim of the flexible nanowindows can accelerate permeation of molecules having a polarized charge center.

A difference in electronegativity between heteroatoms such as hydrogen atoms or oxygen atoms contained in the functional groups formed in the rim of the flexible nanowindow and carbon atoms causes additional defects in the graphene network and inhomogeneity in electron densities of the atoms constituting the rim of nanowires. These partial charges along the rim induce an electrostatic field at a size on the order of GV/m around the flexible nanowindow. This electrostatic field has an attractive interaction with molecules having permanent multipoles such as quadrupole moments of O₂ and N₂. Examples of heteroatoms to be introduced are nitrogen, oxygen, sulfur, phosphorus, chlorine, iodine, bromine, and boron, and particularly oxygen and boron act effectively. Due to the difference in electronegativity, oxygen atoms serving as donors and boron atoms serving as acceptors involve in the carbon atoms of the rim of the flexible nanowindow and give an inhomogeneous electron distribution to the rim of flexible nanowindows. Similar effects can also be obtained by addition of donor materials such as tetrathiafulvalene (TTF) and acceptor materials such as tetracyanoquinodimethane (TCNQ). However, it is more direct and effective for heteroatoms to form the edge in the rim of the flexible nanowindow. Also, defects (defect part) of carbon atoms may be caused in the rim of the flexible nanowindow according to formation of a flexible nanowindow or processing for introducing functional groups or heteroatoms. This gives the same effect as the introduction of functional groups or heteroatoms to the rim of the nanowindow.

The rim of the flexible nanowindow can vibrate and relax during permeation of molecules. Relaxation of the nanowindow such as an annular polyaromatic molecule varies according to types of permeating molecule but can reduce the permeation energy barrier by a factor of two to five times from that in conventional cases.

When the flexible nanowindow is regarded as having a structure equivalent to a structure of a non-periodic polycyclic polyaromatic molecule, the relaxation effect is expected to be significantly large. This is because the structure of such a non-periodic polycyclic polyaromatic molecule causes phonon vibrations much stronger than a periodic structure. Introduction of flexibility into the flexible nanowindow through relaxation of the rim is important because it occurs concurrently with permeation of molecules.

A mechanism by which molecules larger than the van der Waals diameter in the flexible nanowindow permeate the flexible nanowindow is as follows. Electron distribution of the rim or the functional groups of the flexible nanowindow changes (coordinates) due to an interaction between electrons of the rim or the functional groups of the flexible nanowindow and electrons of penetrating molecules. Thereby, a Coulomb attraction between the rim or the functional groups and the permeating molecules is generated (relaxation). As a result, kinetic energy of permeating molecules can sufficiently break through steric hindrance of the flexible nanowindow rim itself. Molecules such as gases are distinguished by dynamic motion of the rim and partial charge distribution created by the heteroatoms, and thereby selective permeation occurs. Minimum two-dimensional shapes of O₂, N₂, and Ar are 2.99 Å, 3.05 Å, and 3.63 Å.

O₂ has a weak coordination occurring between itself and the rim (functional groups) of the flexible nanowindow and relaxation therebetween also occurs, but since the coordination is weak, the relaxation effect is small (O₂ can pass through a flexible nanowindow smaller than its own size). N₂ has a strong coordination occurring between itself and the rim (functional groups) of the flexible nanowindow and strong relaxation occurs therebetween, and thus the relaxation effect is large (N₂ is easier to pass through a flexible nanowindow smaller than its own size than oxygen). Ar has no relaxation effect because coordination does not occur between itself and the rim (functional groups) of the flexible nanowindow.

Functional groups such as hydroxyl groups, carboxyl groups, and carbonyl groups have several orientations with respect to the flexible nanowindow. Dynamic orientations thereof change a shape of the flexible nanowindow and strongly affect the permeation mechanism and the selectivity.

The rim of the flexible nanowindow is not static but breathing-vibrates and behaves as if breathing and relaxing. Similarly to the charge distribution, this vibration also causes the rim of the flexible nanowindow and the functional groups formed thereon to coordinate with permeating molecules, and thus relaxation is caused.

Graphene has a phonon motion and an intrinsic vibration mode and causes coordinated vibrations in the rim of the nanowindow. These vibrations change an effective size and/or shape of the nanowindow, and thereby permeation properties thereof are determined.

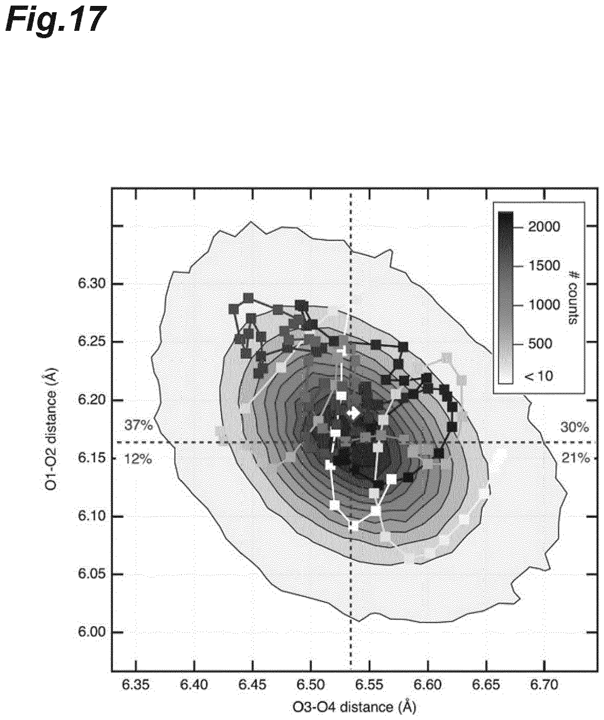

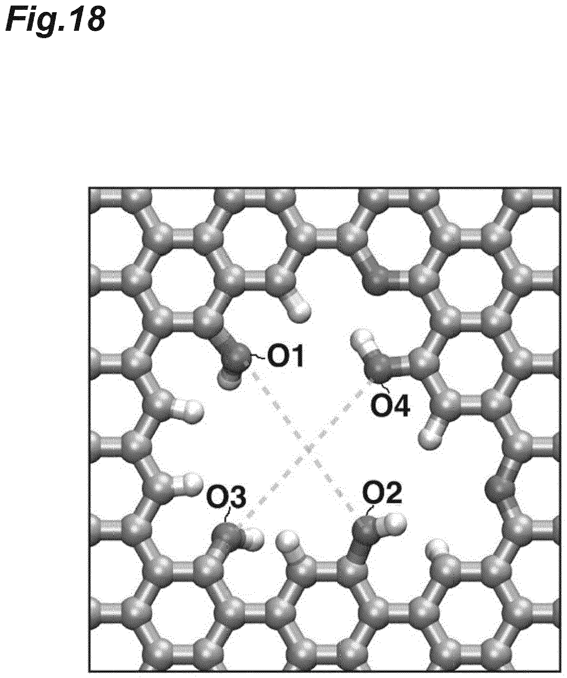

FIG. 17 shows breathing vibrations of the flexible nanowindow illustrated in FIG. 18. The breathing vibration refers to vibrations that expand and contract in a concentric shape as if breathing. The color gradient of the rectangle in FIG. 17 corresponds to a distance when an N₂ molecule permeated through the flexible nanowindow, and the darker mark corresponds to an N₂ center closer to a graphene plane. Therefore, a relationship between a distance of N₂ to the graphene and the breathing vibration is illustrated. Also, shading of the background shows distribution of distances between O1 and O2 atoms and between 03 and 04 atoms illustrated in FIG. 18, and a darker color indicates higher frequency at that distance. Therefore, the following is shown in FIG. 17. That is, the nanowindow of FIG. 18 vibrates with an amplitude of about 0.35 Å centered on the distance between the O1 and O2 atoms of 6.16 Å and the distance between the 03 and 04 atoms of 6.54 Å.

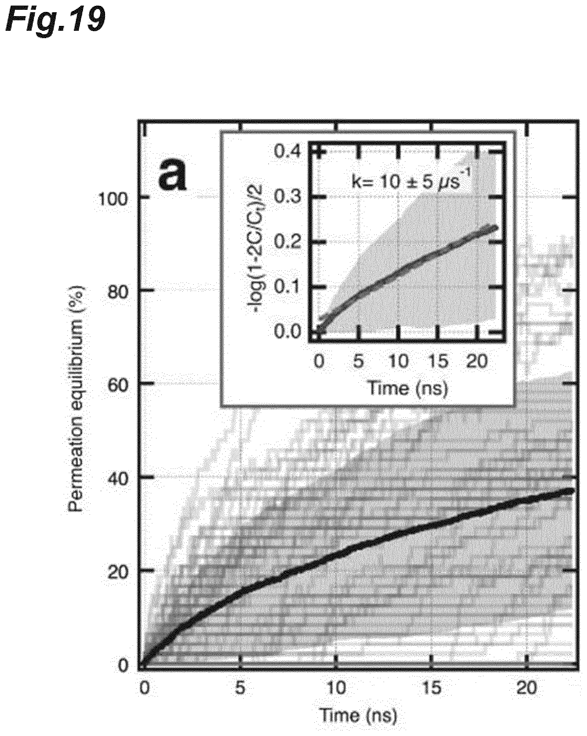

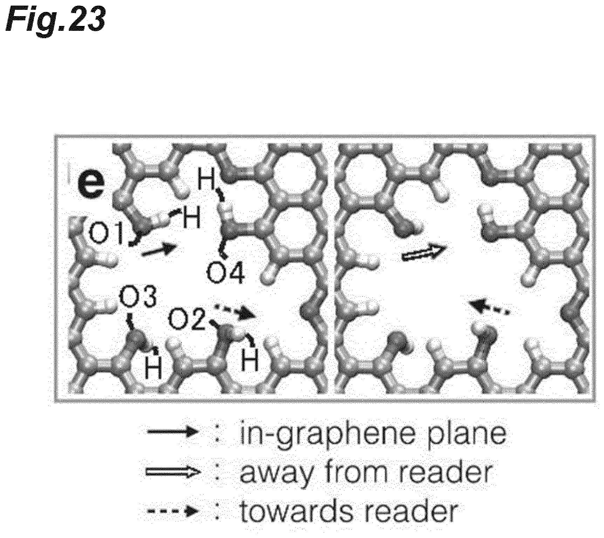

FIGS. 19 to 22 are diagrams showing results of MD simulations. In FIGS. 19 to 22, the thin line indicates a result of each simulation run. A dark black line indicates an average of all runs, and the shaded area is a standard deviation each time. The inset subgraph is a linearization of all data including a linear approximation to the average. Also, in FIGS. 23, 24, and 25, the arrows indicate orientations of OH functional groups containing the O1 atom and the 02 atom, the black arrow indicates that it is in the graphene plane, the white arrow indicates an orientation toward the back, and the dashed line arrow indicates an orientation toward the front.

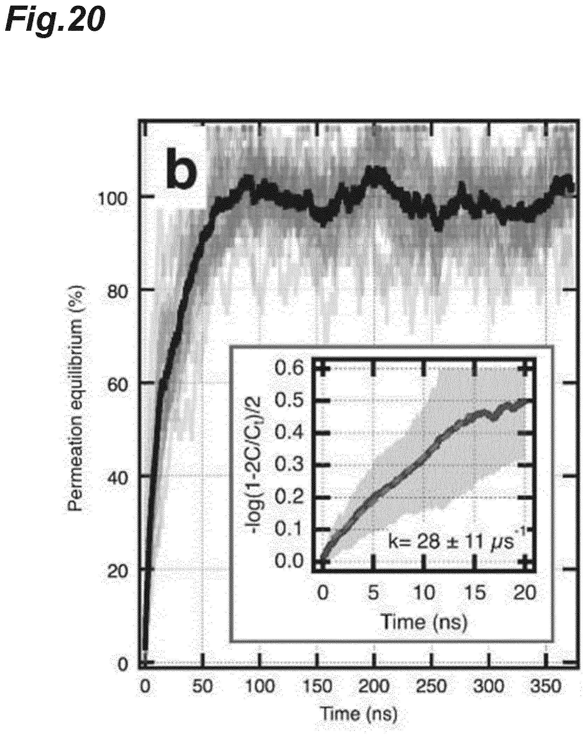

From the shape of the distance histogram in FIG. 17, it is clear that a coordinated operation of the breathing vibration of the rim is asymmetric. Actually, a Pearson correlation coefficient between the 01-02 interatomic distance and the 03-04 interatomic distance illustrated in FIG. 20 is -0.38. This means that, while one direction of a length of the rim of the flexible nanowindow contracts, one direction perpendicular thereto extends. Vibration of the rim of the flexible nanowindow coordinated with the permeating molecules is very similar to that observed in framework dynamics of small-pore zeolites called a "window breathing" mode. Permeation of molecules is effectively performed when the shorter O-O interatomic distance (that is, the 01-02 interatomic distance) is greater than its average.

### <Opening and Closing by Rotation of Functional Group>

There are cases in which free rotation of the functional groups and vibrations of the rim of the flexible nanowindow create a kind of gate with respect to permeating molecules. By mimicking nanochannels (grooves) of proteins, it has been demonstrated that flexible nanowindows having negatively charged carboxylic acid groups exhibit an asymmetric energy profile of ion permeation at both sides of a graphene wall. This was due to different ways of creating different environments on both sides of the graphene wall so that the carboxylic acid groups orient toward the graphene plane. Therefore, in the MD simulation, all configurations of energy-efficient flexible nanowindow need to be sampled in consideration of the flexible framework.

Functional groups of out-of-graphene-plane can also be dynamically switched in their orientation. MD simulations were run for a change in permeability due to orientations of the functional groups (for example, the hydroxyl groups containing O1, 02, 03, and 04 in FIG. 18) in the rim of the flexible nanowindow. A set of MD simulations for N₂ permeation through the flexible NW-3.30 nanowindow (see FIG. 19) show very large fluctuations in permeation rate (10±5 µs⁻¹) even with a simulation time up to 20 nanoseconds. The H atom (which electrostatically interacts with the N₂ molecule) bonded to the O atom in the hydroxyl groups has a degree of freedom in movement according to rotation of an H-O-C-C dihedral angle. However, the H atom is temporarily locked in a local energy minimal configuration (when the nanowindow framework is quenched at a specific time).

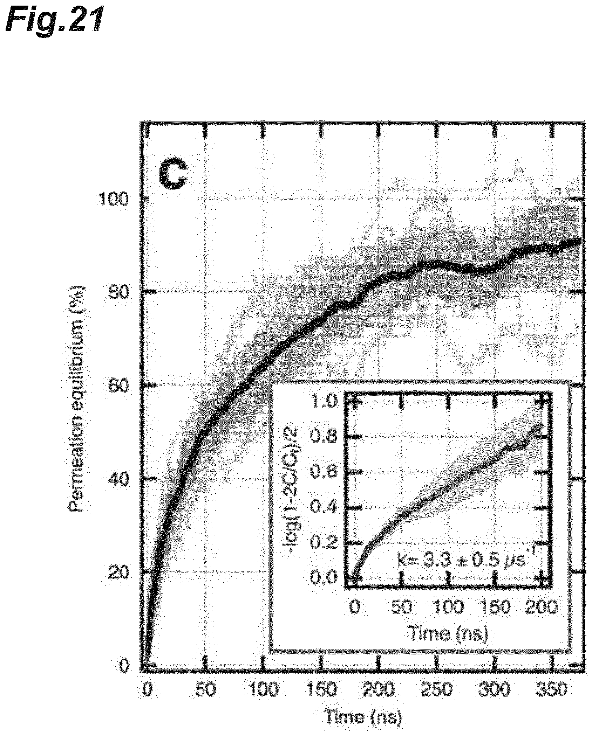

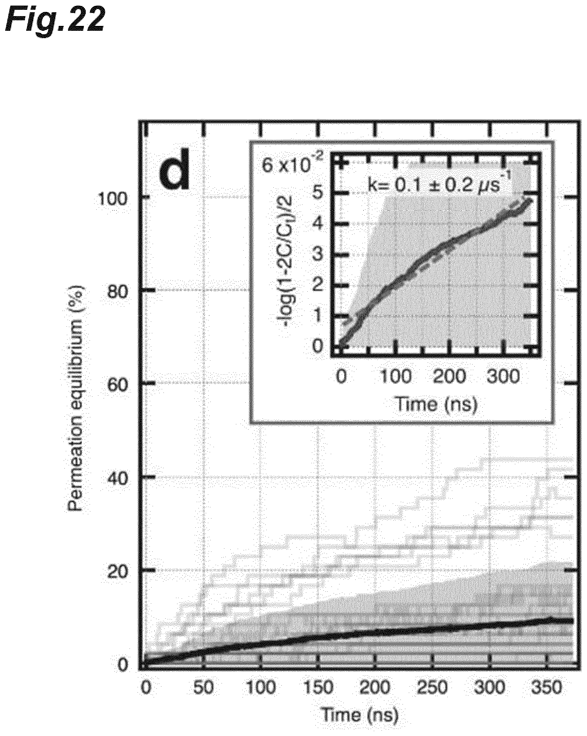

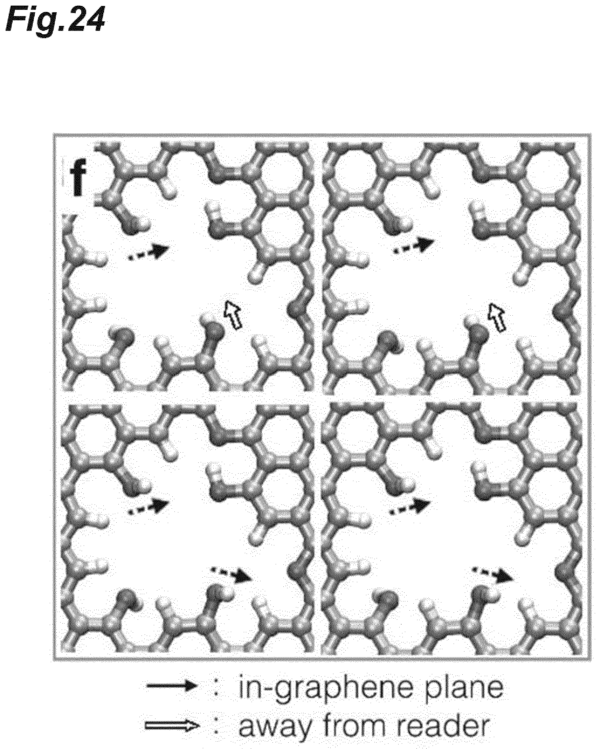

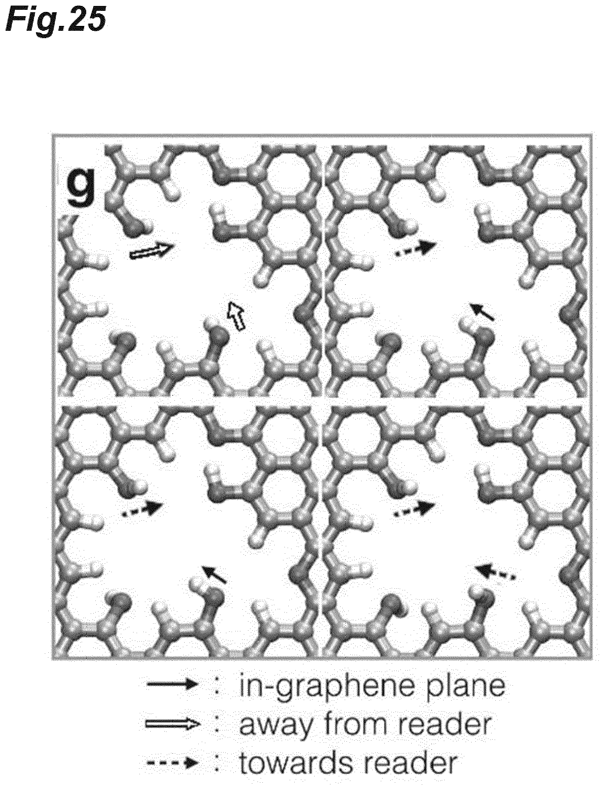

Thereby, three different rate regimes of permeation can be identified. A fast permeation regime (k = 28±11 µs⁻¹ FIG. 20) occurs when atomic pairs of H-O1 and H-O2 are oriented toward opposite sides of the graphene plane and oriented in a direction away from each other (see FIG. 23. see also FIG. 18 for notation of O atoms). This allows a larger nanowindow space to be opened for permeating N₂. In all these cases, H-O2 creates a favorable environment for permeation by being oriented toward the front side of FIG. 23. At a medium permeation rate (k = 3.3±0.5 µs⁻¹ in FIG. 21), the atomic pairs of H-O1 and H-O2 are oriented in opposite directions of the out-of-graphene-plane to each other and a converging direction or oriented in the same direction of the out-of-graphene-plane as each other but a direction away from each other (see FIG. 24). Finally, in a slow rate permeation regime (k = 0.1±0.2 µs⁻¹, FIG. 22), both the atomic pairs point in the same direction of the out-of-graphene-plane and a converging direction (see FIG. 25). As a result, they behave like atomic gates that block substances that are trying to permeate therethrough.

In the slow rate permeation regime, the flexible nanowindow serves as a purely electrostatic gate for N₂ permeation due to torsion of the functional groups H-O1 and H-O2 (because H is modeled as a charging point lacking a dispersion interaction). At this time, the 01-02 interatomic distance is the smallest open distance. From this, it is ascertained not only that the 01-02 interatomic distance plays a major role in permeation, but that position of the H atom behaves as an atomic gate for molecules with which the H atom interact electrostatically. This indicates that there is a high likelihood of this effect being able to be utilized also by including other electrostatic functional groups in the rim of the flexible nanowindow.

Since O₂ is smaller than N₂, opening and closing of the gate occurs in a flexible nanowindow of NW-2.73 or less which is smaller than that in a case of N₂.

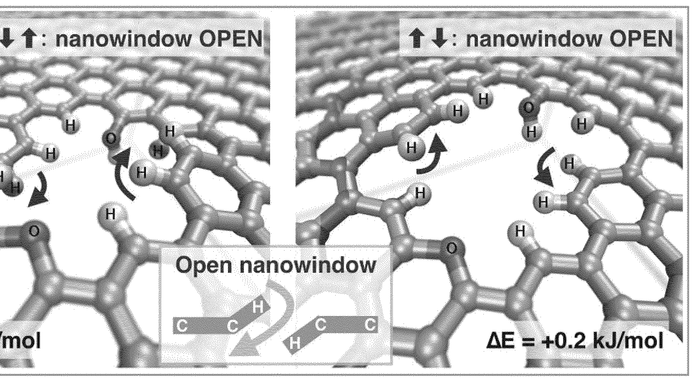

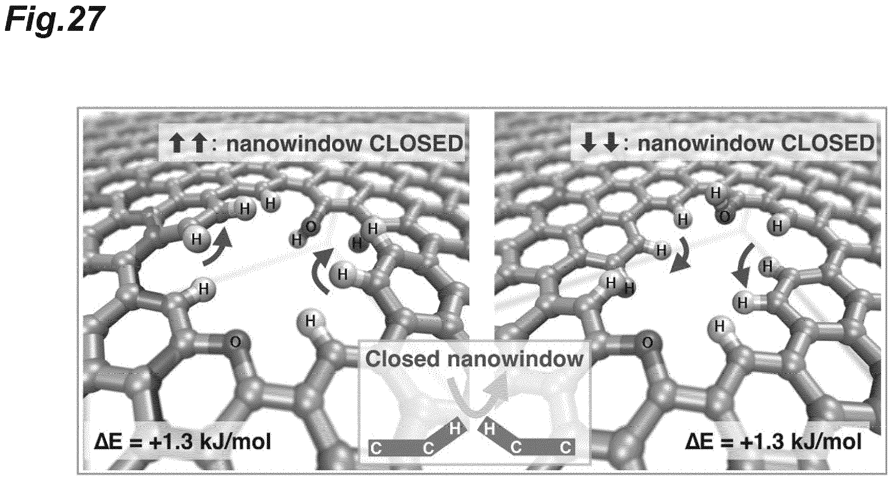

FIGS. 26 and 27 are diagrams for explaining an opening/closing behavior (atomic gate) of the flexible nanowindow. In both diagrams, a light gray atom indicates carbon (C), a dark gray atom indicates oxygen (O), and a white atom indicates hydrogen (H). FIG. 26 shows two examples of a permeable state in which the nanowindow is open. In these examples, a pair of hydrogen atoms at opposite poles are oriented in opposite directions to each other with the graphene plane as a reference. The nanowindow of FIG. 26 has a van der Waals diameter of 3.78 Å.

FIG. 27 shows two examples of an impermeable state (atomic gate) in which the flexible nanowindow is closed. In the impermeable state of FIG. 27, a pair of hydrogen atoms at opposite poles are oriented in the same direction as each other with the graphene plane as a reference. The energy difference ΔE at the lower left in each of FIGS. 26 and 27 is based on the diagram on the left side of FIG. 26 as a reference (0).

In a first case, as shown in FIG. 26, a slow regime in which O₂ is allowed to permeate when hydrogens bonded to the rim open in a direction opposite to the graphene plane is created (rate constant 1.8 µs⁻¹). In a second case, as shown in FIG. 27, hydrogens facing each other bend in the same direction with respect to the graphene plane. Thereby, the flexible nanowindow is closed and behaves like an atomic gate. In this way, an impermeable regime is created (rate constant < 0.001 µs⁻¹). The position at which the flexible nanowindow is open (left side of FIG. 26) is slightly advantageous thermodynamically (ΔE = -1.3 kJ/mol) compared to the closed flexible nanowindow.

As a method for obtaining graphene including functional groups having two or more types of orientation as described above, a method of heat-treating graphene in air at 600 K for 10 minutes can be exemplified. Thereby, flexible nanowindows of a desired size can be formed. Then, the graphene is immersed, for example, in a 1 mol/L nitric acid aqueous solution for 1 hour under a temperature condition of 300 K to introduce heteroatoms. Thereafter, the heteroatom-introduced graphene is washed with ultrapure water, then transferred to a polycarbonate membrane filter, set in a membrane filter holder, and thereby a gas molecular membrane can be formed. Some edges of the exposed flexible nanowindows are passivated with -H, -OH, or C-O-C terminations.

Voltage application, infrared ray irradiation, or the like is effective for opening and closing the flexible nanowindows utilizing the charge distribution of the rim (functional groups). The charge distribution on the rim of the nanowindow can be easily controlled by voltage application. For example, when a voltage is applied so that the entire graphene is brought into an electron-rich state, the rim of the nanowindow is filled with electrons and the flexible nanowindow becomes a closed state.

When the flexible nanowindow is irradiated with electromagnetic waves such as infrared rays, rotation or libration motion of the functional groups become active due to thermal motion, and the flexible nanowindow becomes a closed state. Also, the flexible nanowindow becomes a closed state due to an effect of phonons caused by the rim of the flexible nanowindow being irradiated with electromagnetic waves. Also, after the graphene is weakly irradiated with infrared rays to be maintained in a state of high molecular permeability, when the infrared irradiation is stopped, and a disposition of the functional groups is maintained in an open state of the flexible nanowindows and cooled, the flexible nanowindows can be kept in an open state.

A flexible nanowindow can allow molecules larger than its own van der Waals diameter to permeate therethrough. For example, an O₂ molecule with a van der Waals diameter of 3.0 Å can easily permeate through a nanowindow with a van der Waals diameter of 2.7 Å in a closed state at an ultra-high rate of 600 m³·min⁻¹·m² by bringing the nanowindow into an open state. Also, for two types of molecules having almost the same van der Waals diameter, when one of them interacts with the flexible nanowindow and the other does not, these two types of molecules can be separated by the flexible nanowindow.

### <Separation Method in Gas Phase>

Hereinafter, a separation method in a gas phase using the filter unit will be described. A case in which dry air is separated into O₂, N₂, and Ar using the filter unit of the present disclosure will be described. As the conductive filter 1, for example, a carbon filter having flexible nanowindows is used. When dry air is supplied to the filter unit 10 or 11 as illustrated in FIGS. 7 or 8 with electric charge turned off, O₂ permeates through the conductive filter 1 (1a,1b). On the other hand, N₂ and Ar do not permeate therethrough. Therefore, a gas having an O₂ concentration higher than that of the dry air introduced into the filter unit 10 or 11 can be obtained downstream of the conductive filter 1. Thereafter, when a voltage of 1 V to 100 V is applied to the conductive filter 1 (1a, 1b), an amount of permeation of N₂ increases, but an amount of permeation of Ar does not change. Therefore, a gas having an Ar concentration higher than that of the dry air can be obtained upstream of the conductive filter 1. Also, immediately after the voltage application, since nitrogen that has been stagnant permeates through the permeation holes, a gas having an N₂ concentration higher than that of the dry air can be obtained downstream of the conductive filter.

Conventional carbon molecular sieves could achieve about 30 times in O₂:N₂ selectivity, but a diffusion limit was large and there was a limit to the permeation rate. Polymers such as polysulfone, polycarbonate, and polyimide available on the market were able to reach about 6 times in O₂:N₂ selectivity in terms of permeation rate. However, even best membranes including a polymer membrane containing a mixed matrix rarely exceed 10 times in O₂:N₂ selectivity. In separation with such polymers, only a molecular selectivity that is several orders of magnitude lower than that of flexible nanowindows can be obtained. On the other hand, in the present disclosure, as described above, selectivity for molecular separation (molecular selectivity) is excellent, energy costs required for separation can be reduced, and an amount of CO₂ emissions can be significantly reduced.

As described above, molecules of two types having substantially the same van der Waals diameter can be separated by using a carbon filter having flexible nanowindows. Also, high-performance separation can be realized at lower energy costs than in conventional membranes.

While preferred embodiments have been described above, the present disclosure is not limited to the above-described embodiments. For example, the filter unit may have a plurality of pairs of electrodes. The filter unit may include a plurality of at least one of insulators and conductive filters.

### [Examples]

Contents of the present disclosure will be described in more detail with reference to examples, but the present disclosure is not limited to the following examples.

### (Example 1)

Single-walled carbon nanotubes (manufactured by Meijo Nano Carbon Co., Ltd., trade name: EC2.0) synthesized by a direct injection pyrolysis synthesis (DIPS) were prepared. A dispersion liquid of the single-walled carbon nanotubes was spray-coated on one surface of a polycarbonate membrane filter (Isopore manufactured by Merck Co., Ltd.). After the membrane filter was heated to 100°C and dried, the dispersion liquid of the single-walled carbon nanotubes was also spray-coated on the other surface of the membrane filter. The membrane filter was heated to 100°C and dried, and then was further baked at 200°C for 5 minutes. In this way, a film-shaped carbon filter was formed on both surfaces of the disc-shaped membrane filter. In this carbon filter, gaps between carbon nanotubes constituting the carbon filter function as permeation holes. Also, the membrane filter functions as an insulator.

Two disc-shaped platinum meshes were prepared for electrodes. The pair of film-shaped carbon filters formed on both surfaces of the membrane filter were sandwiched between a pair of platinum meshes to obtain a laminate. The laminate was housed in a filter holder to obtain a filter unit. The filter unit had a configuration as illustrated in FIG. 7.

### (Example 2)

A disc-shaped platinum mesh and carbon paper were each prepared for electrodes. A pair of film-shaped carbon filters formed on both surfaces of the membrane filter manufactured in the same procedure as in example 1 were sandwiched between the platinum mesh and the carbon paper to obtain a laminate. This laminate was housed in a filter holder to obtain a filter unit. This filter unit had a configuration as illustrated in FIG. 8.

### (Example 3)

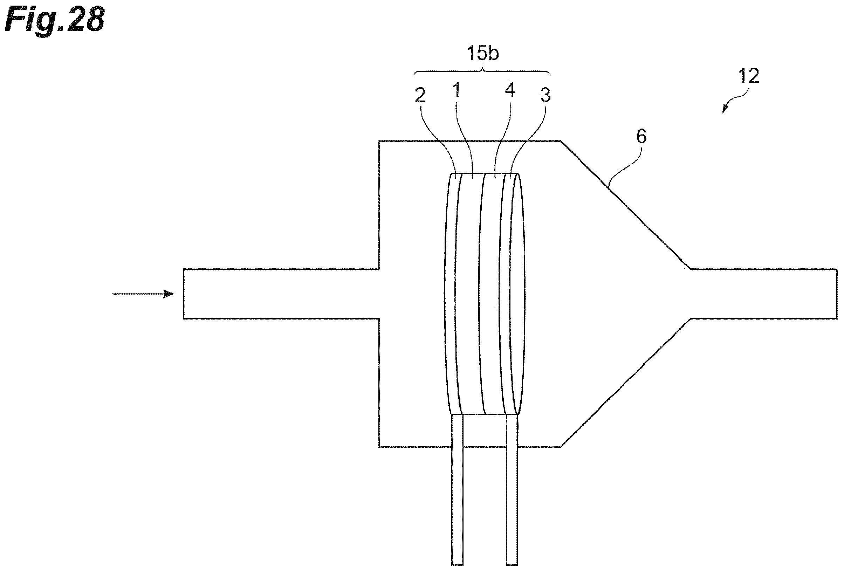

A filter unit 12 having a structure as illustrated in FIG. 28 was manufactured by the following procedure. A film made of a polyimide resin having a thickness of 10 µm in which through holes having an average opening diameter of 1 µm were perforated was prepared. Single-layer graphene (manufactured by Graphena) was transferred to the film and heated in air at 250°C to form flexible nanowindows on the single-layer graphene. The transferred single-layer graphene corresponds to the conductive filter 1, and the polyimide film corresponds to the insulator 4. Some edges of the exposed flexible nanowindows were passivated with -H, -OH, or C-O-C terminations.

Next, a platinum mesh having a disc-shaped outer shape was used as the working electrode 2 and laminated to be in contact with the conductive filter 1. Carbon paper was used as the counter electrode 3 and laminated to be in contact with the insulator 4. A laminate 15b was housed in the filter holder 6 so that the working electrode 2 formed of the platinum mesh was on the upstream side and the counter electrode 3 formed of the carbon paper was on the downstream side, and thereby the filter unit 12 was formed.

### (Example 4)

Graphene available on the market was heat-treated in air at 600 K for 10 minutes to form flexible nanowindows. This graphene was immersed in a 1 mol/L nitric acid aqueous solution at 300 K for 1 hour to introduce heteroatoms into the flexible nanowindows. The heteroatom-introduced graphene was washed with ultrapure water, then transferred to a polycarbonate membrane filter, set in a membrane filter holder, and thereby a gas molecular membrane was formed. Some edges of the exposed flexible nanowindows were passivated with -H, -OH, or C-O-C terminations. In this way, a conductive filter having flexible nanowindows in which functional groups having two or more types of orientation were bonded was obtained.

### Industrial Applicability

According to the present disclosure, a filter unit, a separation device, and a separation method capable of separating a fluid with high accuracy can be provided.

### Reference Signs List

1, 1a, 1b Conductive filter, 2: Electrode (working electrode), 3: Electrode (counter electrode), 4: Insulator, 5: Membrane filter, 6: Filter holder, 7: Main flow path, 8a, 8b: Branch flow path, 9: Branch part, 10, 11, 12: Filter unit, 15, 15a, 15b: Laminate, 20: Power supply device, 30: Introduction part, 40 Outflow part: 50 Control unit, 100: Separation device.

## Claims

1. A filter unit comprising:
a conductive filter having permeation holes:
a pair of electrodes configured to apply a voltage to the conductive filter; and
an insulator configured to prevent a current from flowing between the pair of electrodes.

2. The filter unit according to claim 1, wherein
the permeation holes include a flexible nanowindow which is able to switch two or more types of orientation of functional groups formed at a rim by voltage application, and
the pair of electrodes are configured to change molecular selectivity or molecular permeability of the conductive filter by applying a voltage to the conductive filter.

3. A separation device comprising:
the filter unit according to claim 1 or 2;
an introduction part configured to introduce a fluid into the filter unit; and
an outflow part configured to cause the fluid to flow out from the filter unit, wherein
the outflow part includes a branch part configured to switch an outflow destination of the fluid in conjunction with change in a voltage applied to the conductive filter by the pair of electrodes.

4. The separation device according to claim 3, further comprising a control unit configured to control a switching operation of the branch part based on a change in voltage.

5. A separation method for separating a fluid using a conductive filter having permeation holes, the separation method comprising:
a step of changing distribution of electric charges in the permeation holes or a size of the permeation holes by applying a voltage to the conductive filter with the conductive filter electrically insulated.

6. The separation method for separating the fluid according to claim 5, wherein
the permeation holes include a flexible nanowindow which is able to switch two or more types of orientation of functional groups formed at a rim by voltage application, and
molecular selectivity or molecular permeability of the conductive filter is changed by applying a voltage to the conductive filter in the step.

7. The separation method for separating the fluid according to claim 5 or 6, further comprising:
a step of switching an outflow destination of the fluid in conjunction with change in a voltage of the conductive filter.
